# EUROPEAN PATENT SPECIFICATION

(11) **EP 3 751 249 B1**
(45) Date of publication and mention of the grant of the patent: **06.09.2023**
(21) Application number: 18905555.1
(22) Date of filing: 09.02.2018
(51) Int. Cl.: G01M 17/08, G01M 99/00, B61F 9/00, B61L 15/00, G01M 7/00, B61K 9/00

(54) **DEVICE AND METHOD FOR DETECTING ABNORMALITY IN RAILROAD VEHICLE**
VORRICHTUNG UND VERFAHREN ZUM ERKENNEN VON ANOMALIEN IN EINEM EISENBAHNFAHRZEUG
DISPOSITIF ET PROCÉDÉ D'ÉTABLISSEMENT DE DÉTECTION D'ANOMALIE DANS UN VÉHICULE FERROVIAIRE

(43) Date of publication of application: 16.12.2020
(73) Proprietor: Hitachi, Ltd., Tokyo 100-8280 (JP)
(72) Inventor: HARA, Kosuke, Tokyo 100-8280 (JP); FURUTANI, Ryo, Tokyo 100-8280 (JP); IWASAKI, Katuyuki, Tokyo 100-8280 (JP); WATANABE, Takao, Tokyo 100-8280 (JP)
(74) Representative: Mewburn Ellis LLP
(86) International application number: PCT/JP2018/004688
(87) International publication number: WO 2019/155627

(56) References cited:
- GB-A- 2 416 034
- JP-A- H0 815 098
- JP-A- S6 196 440
- JP-A- 2006 192 993
- JP-A- 2011 245 917
- JP-A- 2011 245 917
- JP-A- 2012 078 213
- JP-A- 2012 086 671
- JP-B2- 4 298 433
- US-A1- 2015 051 792

## Description

### Technical Field

The present invention relates to an abnormality detection device and method for a railroad car.

### Background Art

There is an increasing demand among railway operators for an improvement in maintainability, and technologies for implementing condition based maintenance (CBM) have been requested. In order to reduce operation and maintenance cost of railroad cars and for risk management, an abnormality detection device or monitoring system has been required in recent years as one of the technologies, the abnormality detection device or monitoring system being capable of detecting a sign of abnormality in vibration comfort of a car, specifically, detecting vibrations of the car (car body) at an early stage, diagnosing and determining a factor of the abnormality in order to reduce downtime that is a time during which a system or service in operation is out of action or reduce maintenance cost.

For example, a technology disclosed in PTL 1 is conventionally known as an abnormality detection method and device. PTL 2 proposes apparatus which detects abnormality of a rail vehicle by detecting the vibration data. PTL 3 proposes a railroad vehicle state monitoring device includes calculates an amplitude ratio between a vehicle body vibration acceleration and an axle box vibration acceleration. PTL 4 proposes an error detection system capable of detecting abnormal vibration in a car due to deterioration or an insignificant failure of a device separately from an error in ground equipment.

### Citation List

### Patent Literature

PTL 1: JP 2004-170080 A
PTL 2: JP 4298433 B2
PTL 3: JP 2011-245917 A
PTL 4: GB 2416034A

### Summary of Invention

### Technical Problem

PTL 1 discloses "A car abnormality detection method for detecting vibrations of a car and detecting an abnormality in the car and track for the car based on the detected vibrations in which vibrations of a truck and wheel axle of the car are detected, and whether the cause of the vibrations lies in the truck or the track is determined based on a value of the detected vibrations of the truck and a value of the detected vibrations of the wheel axle". In other words, disclosed is a car abnormality detection method for detecting vibrations of a car and detecting an abnormality in the railroad car and track based on the detected vibrations.

More specifically, the method disclosed in PTL 1 is designed to detect acceleration of both the truck and wheel axle of the railroad car, filtering the detected acceleration of the truck and the detected acceleration of the wheel axle, determining whether a cause of the vibrations lies in the truck or the track based on whether the acceleration after being subjected to noise processing is greater than a predetermined threshold.

The method disclosed in PTL 1 is designed to be applied to a case where it is possible to clearly determine whether the abnormality factor lies in the truck or the track, but a case where the abnormality vibrations occur due to both a car-side abnormality factor and a track-side abnormality factor is not particularly considered; therefore, there is a possibility that the abnormality factor may be erroneously detected.

In order to improve maintainability, it is necessary to estimate the abnormality factor in a short period of time after detecting the sign of the abnormality.

Conventionally, in order to detect and estimate the sign of the abnormality, a dedicated sensor is required for each device in which an abnormality is likely to occur, which leads to an increase in cost.

Therefore, an object of the present invention is to provide an abnormality detection technology for a railroad car capable of detecting and estimating an abnormality factor with a small number of sensors and in a short period of time in not only a case where abnormal vibrations are occurring in the car due to a car-side abnormality factor or a track-side abnormality factor but also a case where abnormal vibrations are occurring in the car due to both the car-side abnormality factor and the track-side abnormality factor.

### Solution to Problem

In order to accomplish the above object, one typical aspect of an abnormality detection device for a railroad car of the present invention is provided according to claim 1. Additionally, a method is provided according to claim 8.

### Advantageous Effects of Invention

According to the present invention, it is possible to estimate an abnormality factor with a small number of sensors and in a short period of time in not only a case where the factor of the abnormality in the railroad car lies in the car side or the track side but also a case where the abnormality factor lies in both the car side and the track side.

For example, analyzing the vibration data and the operation data to derive abnormality factor elements makes it possible to narrow down abnormality factor elements and in turn makes it possible to reduce the number of cases of parameter surveys and shorten processing time. Further, the current value of the characteristic of each abnormality factor element thus derived is identified, and the abnormality factor is determined based on the result of comparison between the current value and the normal value. At the time of determining the abnormality factor, the use of a mechanics model such as a car mechanics model (car model) or a track mechanics model (track model) allows a physical quantity that has not been measured to be estimated.

### Brief Description of Drawings

[FIG. 1] FIG. 1 is a system configuration diagram of an abnormality detection device for a railroad car, showing a first embodiment of the present invention.
[FIG. 2] FIG. 2 is a system configuration diagram of an abnormality detection device for a railroad car, showing another embodiment of the first embodiment.
[FIG. 3] FIG. 3 is a system configuration diagram of an abnormality detection device for a railroad car, showing yet another embodiment of the first embodiment.
[FIG. 4] FIG. 4 is a diagram showing time-series waveforms of car-body lateral vibration acceleration when abnormal vibrations occur in a car b of a train X due to a car-side abnormality factor in the abnormality detection device for a railroad car of the first embodiment.
[FIG. 5] FIG. 5 is a flowchart showing a flow of processing to be executed by a data analyzer in the abnormality detection device for a railroad car of the first embodiment.
[FIG. 6] FIG. 6 is a flowchart showing a flow of processing to be executed by a parameter estimator in the abnormality detection device for a railroad car of the first embodiment.
[FIG. 7] FIG. 7 is a diagram showing a result of comparison between an actual measurement value of the car-body lateral acceleration PSD and an analysis value of the car-body lateral acceleration PSD before and after parameter estimation in the parameter estimator of the first embodiment.
[FIG. 8] FIG. 8 is a flowchart showing a flow of processing to be executed by an abnormality factor estimator in the abnormality detection device for a railroad car of the first embodiment.
[FIG. 9] FIG. 9 is a diagram showing an abnormality factor estimation result from the abnormality factor estimator of the first embodiment.
[FIG. 10] FIG. 10 is a diagram showing time-series waveforms of car-body lateral vibration acceleration when abnormal vibrations occur in each car of the train X due to a track-side abnormality factor, the time-series waveforms being detected by the abnormality detection device for a railroad car of the first embodiment.
[FIG. 11] FIG. 11 is a diagram showing an abnormality factor estimation result from the abnormality factor estimator of the first embodiment.
[FIG. 12] FIG. 12 is a system configuration diagram of an abnormality detection device for a railroad car, showing a second embodiment of the present invention.
[FIG. 13] FIG. 13 is a diagram showing time-series waveforms of car-body lateral vibration acceleration when abnormal vibrations occur in a train Y due to both a car-side abnormality factor and a track-side abnormality factor in the abnormality detection device for a railroad car of the second embodiment.
[FIG. 14] FIG. 14 is a diagram showing an abnormality factor estimation result from the abnormality factor estimator of the second embodiment.
[FIG. 15] FIG. 15 is a system configuration diagram of an abnormality detection device for a railroad car, showing a third embodiment of the present invention.
[FIG. 16] FIG. 16 is a flowchart showing processing in a parameter estimator in the abnormality detection device for a railroad car of the third embodiment.

### Description of Embodiments

A description will be given below of an abnormality detection device for a railroad car of the present invention with reference to the drawings.

### [First embodiment]

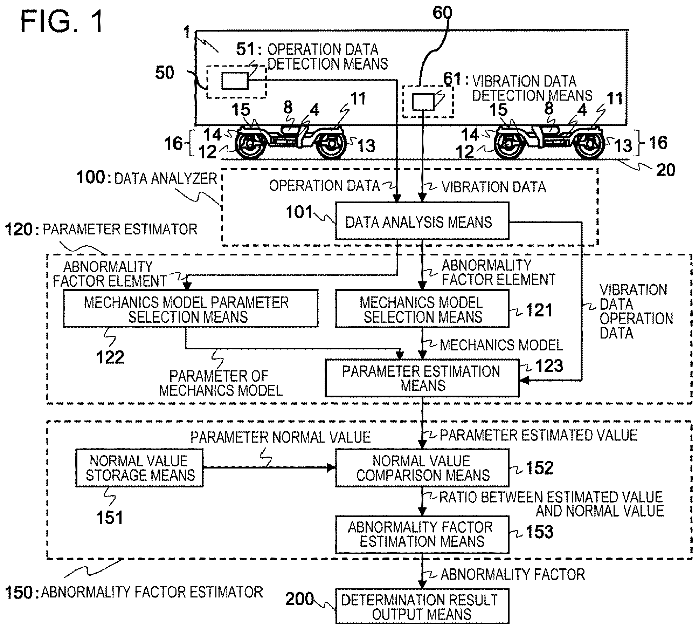

First, a description will be given of a configuration of the abnormality detection device for a railroad car with reference to FIGS. 1 to 3.

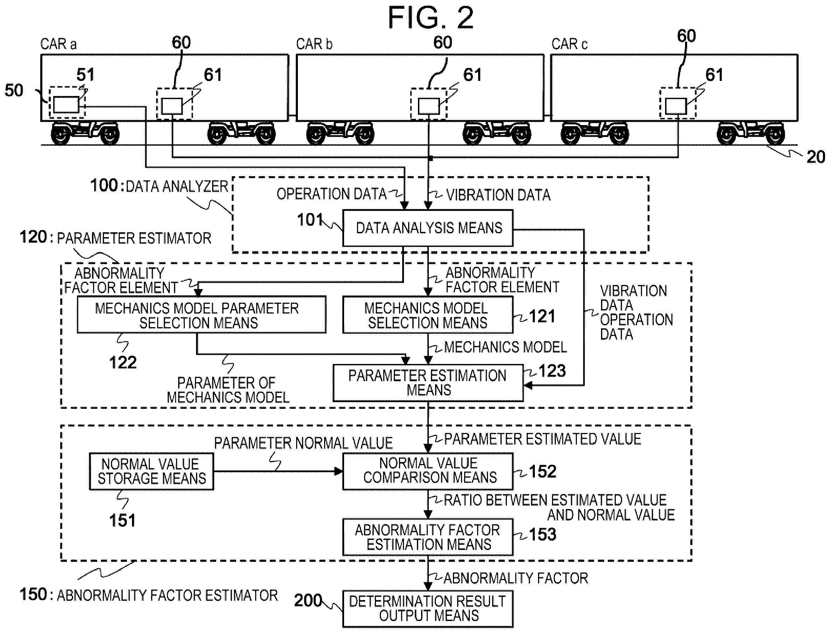

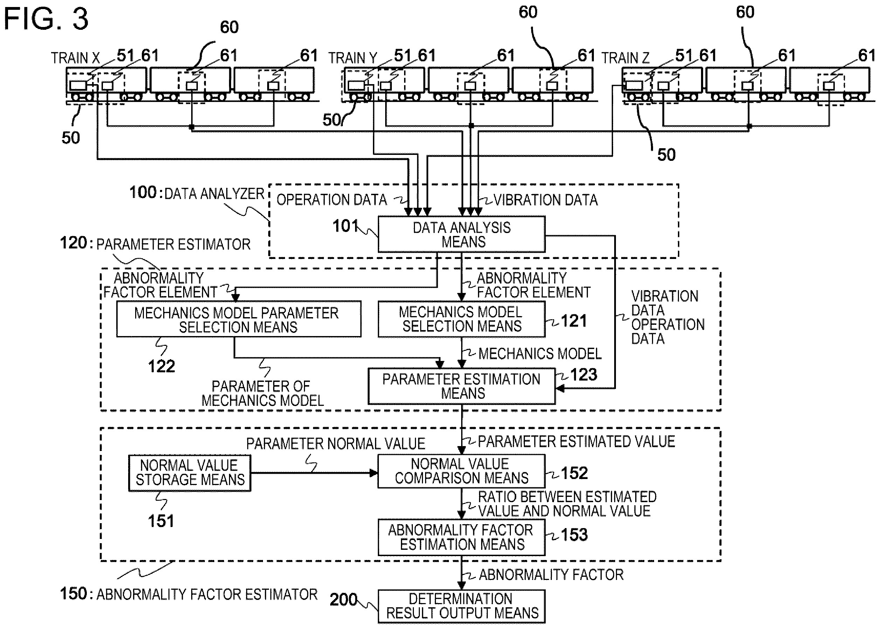

FIG. 1 is a functional block diagram showing a system configuration of the abnormality detection device for a railroad car, and FIGS. 2 and 3 are block diagrams showing abnormality detection devices each corresponding to a modification of the abnormality detection device for a railroad car.

A railroad car running on a track (rail) 20 includes a car body 1 and a truck 16.

The car body 1 is mounted on the truck 16 with an air spring 8 interposed between the car body 1 and the truck 16. Installed on a floor surface of the car body 1 is, for example, a vibration data detector 60 including a car-body accelerometer (not shown) that measures lateral vibration acceleration of the car body 1.

The car-body accelerometer detects voltage generated in the car-body accelerometer, and the voltage generated in the car-body accelerometer is detected by the vibration data detector 60, specifically, a car-body lateral vibration acceleration signal is detected as vibration data.

The vibration data detector 60 includes vibration data detection means 61 including a vibration data detector that detects the vibration data representing vibrations of the railroad car.

Note that the vibration data detection means 61 to be described later may be any means such as an acceleration sensor or a gyro sensor as long as the means is capable of acquiring the vibration data.

Further, although the vibration data detection means 61 is installed on the car body 1, the vibration data detection means 61 may be installed on not only the car body 1, but also a truck frame 11, an axle box body 12, or the like. In the description of the present embodiment, it is assumed that the vibration data detection means 61 is installed on the car body 1.

The vibration data detection means 61 is capable of acquiring vibrations in any one of directions including translation (longitudinal translation, lateral translation, vertical translation) directions and rotation (roll, pitch, yaw) directions relative to longitudinal, lateral, and vertical directions with respect to a traveling direction of the railroad car. In the description of the present embodiment, it is assumed that the acquiring direction is the lateral translation direction.

Further, a plurality of the vibration data detection means 61 may be installed on each car, but, in the description of the present embodiment, it is assumed that one vibration data detection means 61 is installed on each car. Further, a position where the vibration data detection means 61 is installed may be a center of the car body 1 or an end of the car body 1 such as a position over the truck or a car-equipment room.

Further, the car body 1 includes, for example, an operation data detector 50 capable of detecting operation data from an operation management system that manages the operation data.

The operation data detector 50 includes operation data detection means 51 including an operation data detector that detects the operation data such as a traveling speed, traveling position, and occupancy.

Note that FIG. 1 shows an example where only one car is provided with the vibration data detection means 61 and the operation data detection means 51, but, for example, a plurality of cars of one train may be each provided with such means as shown in FIG. 2, or a plurality of cars of a plurality of trains may be each provided with such means as shown in FIG. 3.

Further, FIGS. 1, 2 and 3 each show the data analyzer 100, the parameter estimator 120, and the abnormality factor estimator 150 on a one-by-one basis, but the data analyzer 100, the parameter estimator 120, and the abnormality factor estimator 150 may be provided one by one on each car or each train.

The truck 16 includes the truck frame 11, the air spring 8, a yaw damper 4, an axle box body 12, a wheel axle 13, an axle spring device 14, and an axle box supporting rubber 15 for an axle box serving as a bearing housing of the wheel axle 13.

The wheel axle 13 is held rotatable relative to the axle box body 12, elastically supported by the axle spring device 14 in the vertical direction between the axle box body 12 and the truck frame 11, and elastically supported by the axle box supporting rubber 15 in the lateral direction. The air spring 8 is disposed between the car body 1 and the truck frame 11 to elastically support the car body 1 relative to the truck frame 11.

The abnormality detection device includes the data analyzer 100, the parameter estimator 120, the abnormality factor estimator 150, and the like and acts as a car-vibration factor estimation device that estimates a factor of abnormal vibrations of the railroad car.

The data analyzer 100, the parameter estimator 120, and the abnormality factor estimator 150 each include, for example, an operation device that executes each process, to be described later, in accordance with a program stored inside.

The data analyzer 100 is capable of acquiring the vibration data from the vibration data detection means 61 and the operation data from the operation data detection means 51 and analyzing, identifying, and outputting an abnormality factor element (for example, a wheel shape, axle box supporting device, yaw damper, alignment irregularity, or gage irregularity) that causes the railroad car to vibrate, and the data analyzer 100 primarily includes data analysis means 101.

The data analysis means 101 is capable of receiving the vibration data detected by the vibration data detection means 61 and the operation data detected by the operation data detection means 51 and deriving the abnormality factor element of abnormal vibrations based on the vibration data and the operation data. Specifically, the data analysis means 101 is capable of filtering the vibration data of lateral acceleration of the car body 1 detected by the vibration data detection means 61 to extract data valid for analysis, analyzing the vibration data (lateral acceleration) thus filtered and the operation data to extract a data feature, and deriving the abnormality factor element based on the data feature thus extracted.

Such an abnormality factor element is an element that may cause abnormal vibrations of the railroad car. Broadly speaking, there are two types of abnormality factor elements, a car-side abnormality factor element and a track-side abnormality factor element.

Examples of the car-side abnormality factor element include the axle box supporting rubber 15 of the axle box supporting device and the yaw damper 4 installed on the railroad car.

The track-side abnormality factor element is a wheel shape such as a wheel tread of the wheel axle 13, and examples of the track-side abnormality factor element include alignment irregularity and gage irregularity of the track 20

The alignment irregularity corresponds to unevenness on a side surface of the track in a longitudinal direction, and the gauge irregularity corresponds to a degree of irregularity, under application of strain, relative to a basic dimension (bullet train: 1435 mm, conventional line: 1067 mm) under normal conditions where no strain is applied to a gage (a gage between left and right rails) (a degree of irregularity relative to the basic dimension containing slack in a curve).

Note that a specific processing flow of the data analyzer 100 will be described later.

The parameter estimator 120 is a device capable of selecting a mechanics model (car model or track model) associated with the abnormality factor elements output from the data analysis means 101 of the data analyzer 100 and parameters of the mechanics model, and estimating the parameters of the mechanics model with the railroad car in an abnormal state based on the mechanics model and the parameters of the mechanics model thus selected, the vibration data, and the operation data.

The parameter estimator 120 includes mechanics model selection means 121, mechanics model parameter selection means 122, and parameter estimation means 123.

The mechanics model selection means 121 and mechanics model parameter selection means 122 of the parameter estimator 120 each receive the abnormality factor elements derived by the data analysis means 101 of the data analyzer 100 and select the mechanics model associated in advance with the abnormality factor elements stored in a database (not shown) and the parameters of the mechanics model.

This mechanics model is a model (car model or track model) for predicting vibration characteristics of the railroad car. Examples of such a mechanics model include various mechanics models based on types of vibrations to be predicted such as a car-lateral mechanics model for predicting car-body lateral vibrations and a car-vertical mechanics model for predicting car-vertical vibrations under conditions where a virtual car is running on a virtual track serving as the track 20 having track irregularity such as alignment irregularity or gage irregularity, the virtual car including rigid bodies serving as the car body 1, the truck 16, and the wheel axle 13, and a spring and damper serving as the axle box supporting rubber 15 and the yaw damper 4, the rigid bodies being connected to each other with the spring and damper.

Further, each parameter of the mechanics model is a characteristic value of a corresponding one of the factor elements contained in this mechanics model, and examples of the parameter include a spring constant of the axle box supporting rubber 15 and a damping coefficient of the yaw damper 4 serving as the car model on the car side, and a wheel tread slope of the wheel axle 13 and the degrees of alignment irregularity and gage irregularity of the track 20 serving as the track model on the track side.

The mechanics model from the mechanics model selection means 121 and the parameters of the mechanics model from the mechanics model parameter selection means 122 are input to the parameter estimation means 123.

Further, in addition to the mechanics model and the parameters of the mechanics model, the vibration data detected by the vibration data detection means 61 and the operation data detected by the operation data detection means 51 are input.

Then, estimated values of the parameters of the mechanics model in the abnormal state is derived based on the vibration data and the operation data.

Note that a specific processing flow of the parameter estimator 120 will be described later.

The abnormality factor estimator 150 is a device capable of comparing the parameters of the mechanics model in the abnormal state estimated by the parameter estimator 120 with the parameters of the mechanics model in the normal state to estimate an abnormality factor of the vibrations of the railroad car based on the comparison result.

The abnormality factor estimator 150 includes normal value storage means 151, normal value comparison means 152, and abnormality factor estimation means 153.

The normal value storage means 151 is a storage that stores, for example, normal values of parameters such as the spring constant of the axle box supporting rubber 15, the damping coefficient of the yaw damper 4, the wheel tread slope of the wheel axle 13, and the degree of alignment irregularity and degree of gage irregularity of the track 20.

The estimated values of the parameters of the mechanics model derived by the parameter estimation means 123 of the parameter estimator 120 and the normal values of the parameters in the normal value storage means 151 are input to the normal value comparison means 152.

The normal value comparison means 152 of the abnormality factor estimator 150 obtains a ratio between the estimated value and normal value of each parameter (compares with the normal value) based on the estimated values of the parameters in the abnormal state and the normal values of the parameters in the normal state stored in the normal value storage means 151. The abnormality factor estimation means 153 estimates, based on the ratio thus obtained, the abnormality factor, that is, normality or abnormality in the track and car when the vibration data is generated in the railroad car.

Note that a specific processing flow of the abnormality factor estimator 150 will be described later.

Determination result output means 200 is a device capable of notifying a driver in the car body 1, an operation manager or maintenance staff on the ground, and the like of the estimation result of the abnormality factor estimated and derived by the abnormality factor estimation means 153 of the abnormality factor estimator 150.

FIGS. 2 and 3 show modifications of the first embodiment, FIGS. 2 shows an example where the operation data detection means 51 is installed on one car body (car a), and the vibration data detection means 61 is installed on each of the other car bodies (cars b, c). Further, FIG. 3 shown an example where the operation data detection means 51 and the vibration data detection means 61 are installed one by one on one car body (car a) of each of the trains X, Y, Z, and the vibration data detection means 61 is installed on each of the other car bodies (cars b, c).

In FIG. 2, data from the vibration data detection means 61 installed on each of the cars a, b, c of one train and data from the operation data detection means 51 installed on the car a are supplied to the data analysis means 101 of the data analyzer 100. Further, in FIG. 3, data from the vibration data detection means 61 installed on each car of the plurality of trains X, Y, Z and data from the operation data detection means 51 installed on one car of each of the trains X, Y, Z are supplied to the data analysis means 101 of the data analyzer 100.

In FIGS. 2 and 3, components the same as the components shown in FIG. 1 are denoted by the same reference numerals, and their description is omitted.

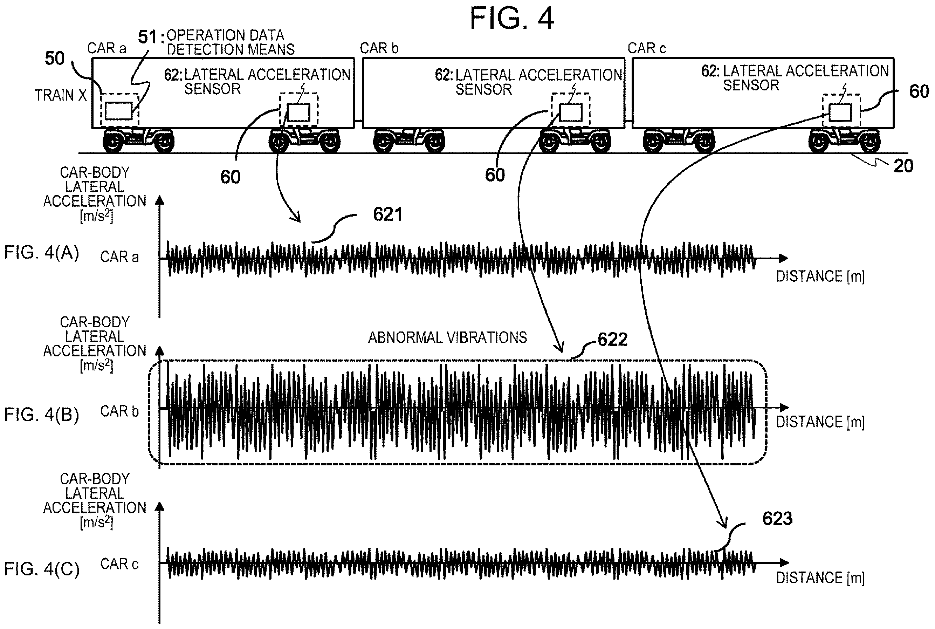

Next, a description will be given, with reference to FIGS. 4 to 9, of specific processing flows of data analysis, parameter estimation, and abnormality factor estimation in the abnormality detection device for a railroad car of the present embodiment.

FIG. 4 is a diagram schematically showing a case (see FIG. 4(B)) where abnormal vibrations occur in the railroad car that is the car b of the train X caused by a factor (car mechanics model) corresponding to a decrease in the damping coefficient of the yaw damper 4 due to oil leakage from the yaw damper 4 (see FIG. 1).

Note that, in the description of the present embodiment, it is assumed that, as the vibration data detection means 61, a lateral-translation-direction acceleration sensor 62 (hereinafter, referred to as a lateral acceleration sensor) installed at the position over the truck is used.

In FIG. 4, a horizontal axis represents a distance [m], and a vertical axis represents car-body lateral acceleration [m/s²]. FIG. 4(A) is a characteristic diagram showing a waveform characteristic 621 of the car-body lateral acceleration [m/s²] measured by the lateral acceleration sensor 62 installed on the car a, FIG. 4(B) is a characteristic diagram showing a waveform characteristic 622 of the car-body lateral acceleration [m/s²] measured by the lateral acceleration sensor 62 installed on the car b, and FIG. 4(C) is a characteristic diagram showing a waveform characteristic 623 of the car-body lateral acceleration [m/s²] measured by the lateral acceleration sensor 62 installed on the car c.

FIG. 4 shows that the waveform characteristic 622 of the car-body lateral acceleration greatly fluctuates in amplitude from left to right in the car b as compared to the cars a, c, and abnormal vibrations occur in the car body 1 (car b).

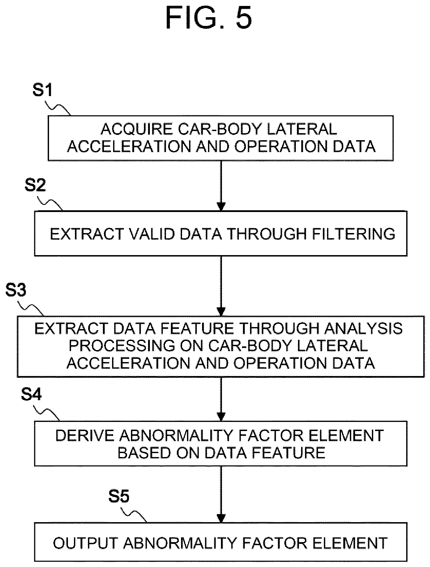

FIG. 5 is a flowchart showing a flow of processing to be executed by the data analyzer in the abnormality detection device for a railroad car of the first embodiment.

The operation based on the flowchart shown in FIG. 5 is as follows. Each step is denoted by S in this flowchart.

First, in S1, the car-body lateral acceleration is acquired from the lateral acceleration sensor 62, and the operational data such as the traveling position, the traveling speed, and the occupancy is acquired from the operation data detection means 51.

S2 to S5 are executed in the data analysis means 101.

Next, in S2, the waveform characteristic 622 (see FIG. 4(B)) representing abnormal vibrations is filtered out from the car-body lateral acceleration [m/s²] acquired in S1 with a well-known filtering technique, and data valid for abnormality factor estimation is extracted.

This step includes preprocessing for the analysis processing executed in S3 such as processing of extracting, from the car-body lateral acceleration, only a frequency band that is easily perceived by humans, and processing of extracting only data on a traveling section where vibrations are particularly large.

In S3, the vibration data and the operation data extracted in S1 and S2 are analyzed to extract a data feature (characteristic value of the factor element).

In this step, for example, processing of extracting a frequency band in which vibrations are particularly large or processing of statistically analyzing the vibration data and the operation data to extract dependency between the vibration waveform and the traveling position is executed through frequency analysis on the vibration data.

Further, as in the embodiments shown in FIG. 2 or FIG. 3, when a plurality of cars or a plurality of trains are provided with a plurality of the vibration data detection means 61 and operation data detection means 51, processing such as extracting a difference in vibration waveform between the cars or trains is executed.

Note that the vibration data detection means 61 detects a large volume of data from a plurality of cars or a plurality of trains, and the operation data detection means 51 detects not only the traveling speed, the traveling position, and the occupancy, but also various data such as a connection state of the cars, which makes it possible to obtain more various and highly accurate data features. Further, as the method for extracting a data feature, a well-known statistical analysis technique or the like may be used, or big data analysis using an artificial intelligence technology or the like may be used.

In the present embodiment, it is assumed that "there is a difference between cars" is extracted as a feature with respect to abnormal vibrations occurring only in the car "b" of the train X.

In S4, the abnormality factor elements are derived based on the data feature extracted in S3.

In the present embodiment, since the data feature is "there is a difference between cars", a determination is made that the abnormality factor lies in the car side rather than the track side.

It is assumed that, as a result, the axle box supporting rubber 15, the yaw damper 4, the wheel tread of the wheel axle 13, and the like are derived from the car-side elements as the abnormality factor elements. Then, these abnormality factor elements are output to the parameter estimator 120 in S5.

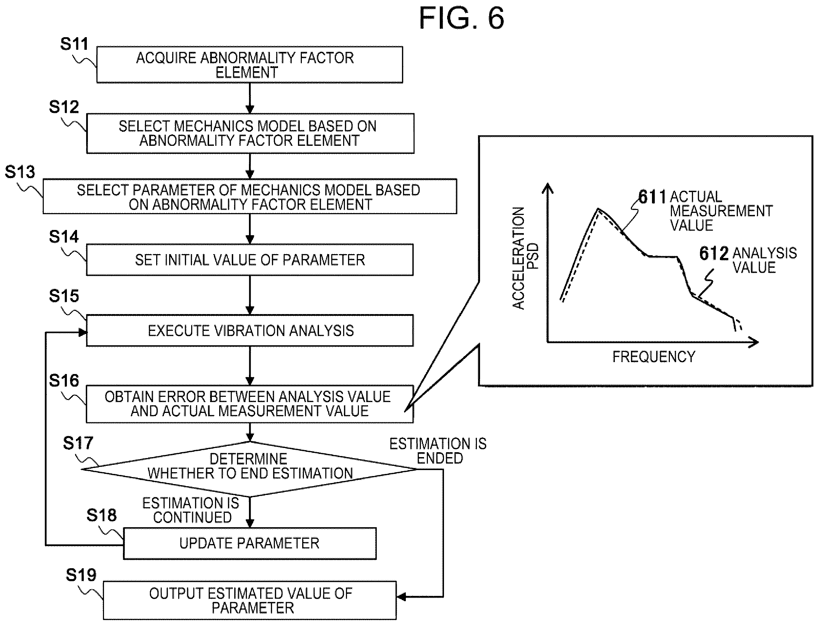

Next, a processing flow of the parameter estimator 120 will be described with reference to FIG. 6. The operation based on the flowchart shown in FIG. 6 is as follows.

First, in S11, information on the axle box supporting rubber 15, the yaw damper 4, the wheel tread of the wheel axle 13, and the like given as the abnormality factor elements is acquired from the data analysis means 101 of the data analyzer 100.

In S12, based on the abnormality factor elements acquired in S11, the mechanics model selection means 121 selects a mechanics model associated in advance with the abnormality factor elements.

The present embodiment focuses on the car-body lateral acceleration; therefore, it is assumed that the car-lateral mechanics model is selected.

In S13, the mechanics model parameter selection means 122 selects parameters relating to the abnormality factor elements from among parameters of the car-lateral mechanics model.

In the present embodiment, since the abnormality factor elements are car-side elements, it is assumed that the spring constant of the axle box supporting rubber 15, the damping coefficient of the yaw damper 4, the wheel tread slope of the wheel axle 13, and the like are selected.

In general, the car-lateral mechanics model contains a large number of parameters. However, as described above, narrowing down, in advance, the parameters to parameters to be estimated based on the abnormality factor elements makes it possible to reduce the number of cases of parameter surveys and in turn shorten the abnormality factor estimation.

S14 to S19 are executed by the parameter estimation means 123.

In S14, initial values (initial estimated values) of the parameters selected in S13 are set.

In the present embodiment, the initial values of the spring constant of the axle box supporting rubber 15, the damping coefficient of the yaw damper 4, the wheel tread slope of the wheel axle 13, and the like are set. The initial values of the parameters may be normal values of the parameters or randomly generated values.

In S15, vibration analysis (car motion analysis) is executed based on the mechanics model and the initial values of the parameters set in S14 to obtain the car-body lateral acceleration based on the parameters thus set.

Note that, in order to execute the vibration analysis, virtual track data such as the degrees of alignment irregularity and gage irregularity of the track 20 in the car-lateral mechanics model is required.

In the present embodiment, in order to make a determination that the track 20 is in the normal state, normal values stored in the normal value storage means 151 such as management reference values prepared in advance or actual measurement values measured using an inspection car are used as the virtual track data.

In S16, the analysis value of the car-body lateral acceleration obtained through the analysis in S15 is compared with the actual measurement value (normal value) to obtain an error. For example, when an analysis value 612 and an actual measurement value 611 coincide with each other, it is possible to estimate (identify) the abnormality factor element using the parameter.

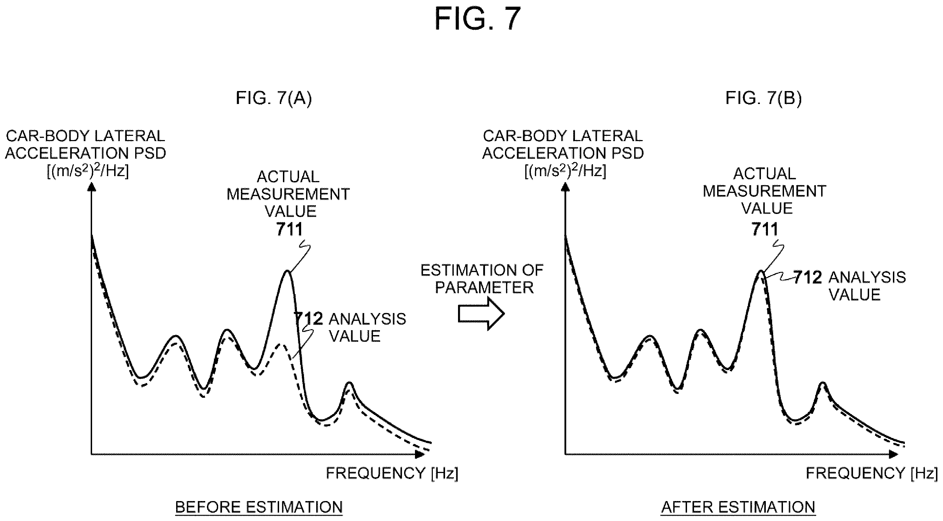

An evaluation index of the error is not particularly limited as long as it is possible to evaluate the error (error comparison), and, in the present embodiment, the evaluation index is a value (hereinafter, referred to as an integrated difference value) resulting from integrating differences between an actual measurement value 711 and an analysis value 712 for each frequency of the power spectrum density (PSD) of the car-body lateral acceleration as shown in FIG. 7.

In S17, when the integrated difference value of the car-body lateral acceleration PSD obtained in S16 is greater than a preset threshold, estimation accuracy is considered insufficient and the estimation is continued, and when the integrated difference value is equal to or less than the threshold, or the number of times of update is greater than a preset number, the estimation is brought to an end.

When the estimation is continued, the parameter is updated in S18. Although no restriction is imposed on the method for updating the parameter, for example, a method for repeatedly updating the parameter using an optimization technique such as a genetic algorithm to make the integrated difference value of the car-body lateral acceleration PSD as small as possible.

In the present embodiment, the parameters such as the spring constant of the axle box supporting rubber 15, the damping coefficient of the yaw damper 4, and the wheel tread slope of the wheel axle 13 are updated, and estimated values of the parameters are obtained such that, as shown in FIG. 7, the actual measurement value 711 and analysis value 712 of the car-body lateral acceleration PSD obtained coincide with each other (see FIG. 7(B)).

In FIG. 7, the horizontal axis represents the frequency [Hz], and the vertical axis represents the car-body lateral acceleration PSD [(m/s²)²/Hz]. FIG. 7(A) is a characteristic diagram showing the actual measurement value 711 shown by a solid line and the analysis value 712 shown by a dotted line before the estimation, and FIG. 7(B) is a characteristic diagram showing the actual measurement value 711 and the analysis value 712 after the estimation.

In FIG. 7, before the estimation, a large difference appears between the actual measurement value and the analysis value in a part of a frequency band where the abnormal vibrations occur, but after the estimation, almost no difference appears between the actual measurement value and the analysis value.

When the estimation is brought to an end, the estimated values of the parameters are output to the abnormality factor estimator 150 in S19.

As described above, the use of the mechanics model eliminates the need of estimating physical quantities such as the spring constant of the axle box supporting rubber 15, the damping coefficient of the yaw damper 4, and the wheel tread slope of the wheel axle 13 that are not directly measured by sensors, that is, eliminates the need of sensors that measure the physical quantities, which in turn makes it possible to reduce the number of sensors.

Note that, in the present embodiment, one lateral acceleration sensor 62 is installed on the car body 1, but when a plurality of the lateral acceleration sensors 62 are installed on the car body 1, the truck 16, the axle box body 12, and the like, updating the parameters to cause a plurality of actual measurement values and analysis values of the lateral acceleration detected by the lateral acceleration sensors 62 coincide with each other makes it possible to increase the accuracy of the parameter estimation.

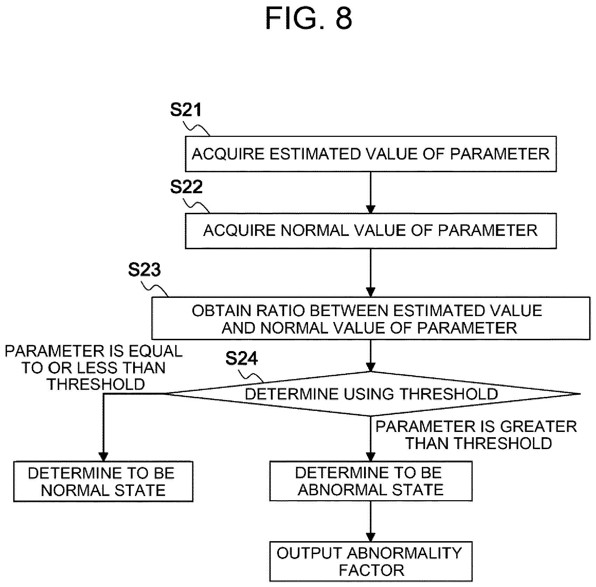

Next, a processing flow of the abnormality factor estimator 150 will be described with reference to FIG. 8. The operation based on the flowchart shown in FIG. 8 is as follows.

First, in S21, the estimated values of the parameters are acquired from the parameter estimator 120.

In the present embodiment, the estimated values of the abnormality factor elements, that is, the spring constant of the axle box supporting rubber 15, the damping coefficient of the yaw damper 4, and the wheel tread slope of the wheel axle 13 in the abnormal state are acquired.

Next, in S22, the normal values of the parameters are retrieved from the normal value storage means 151 in the abnormality factor estimator 150.

The normal values include design values or element test values for the spring constant of the axle box supporting rubber 15 and the damping coefficient of the yaw damper 4, and a value in a newly manufactured state, a management value used for maintenance, or the like for the wheel tread slope of the wheel axle 13.

In S23, the normal value comparison means 152 obtains a ratio between the estimated value and normal value of each parameter.

Then, in S24, the abnormality factor estimation means 153 compares this ratio with a preset threshold to make a determination. This comparison determination is repeated a predetermined number of times.

It can be said that a parameter whose ratio is less than or equal to the threshold indicates a state close to the normal state, and thus is determined to indicate the normal state, and a parameter whose ratio is greater than the threshold is determined to indicate the abnormal state. Then, the parameter determined to indicate the abnormal state is used as the abnormality factor and is output to the determination result output means 200.

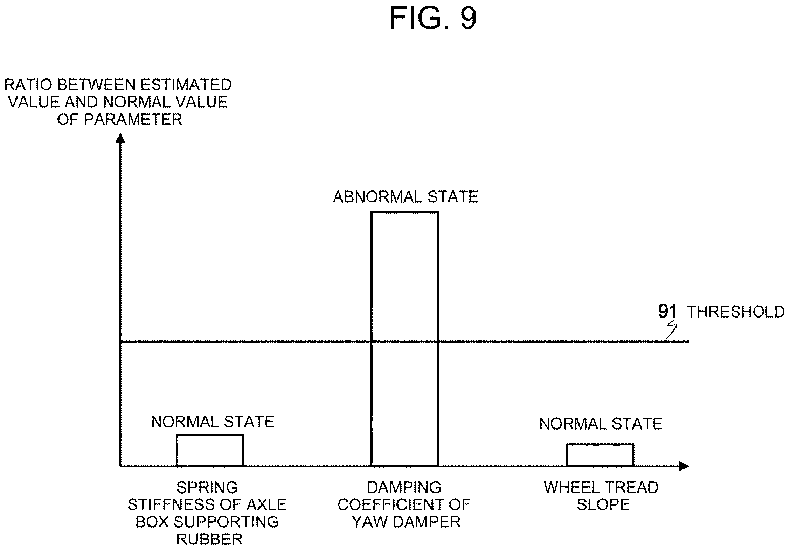

FIG. 9 is a diagram schematically showing a determination of whether the parameters are normal or abnormal in S24, specifically, a schematic diagram showing a relationship between the ratio between the estimated value and normal value of each parameter, shown on the vertical axis, of the abnormality factor elements, shown on the horizontal axis, such as the spring constant of the axle box supporting rubber 15, the damping coefficient of the yaw damper 4, and the wheel tread slope and the threshold.

In the present embodiment, as shown in FIG. 9, the damping coefficient of the yaw damper 4 whose ratio between the estimated and normal values is greater than a threshold 91 is determined to indicate the abnormal state. Then, a decrease in the damping coefficient of the yaw damper 4 is output to the determination result output means 200 as an abnormality factor. The determination result output means 200 notifies the driver on the car, the operation manager or the maintenance staff on the ground, and the like of the estimated result of the abnormality factor using a well-known communication technology.

As described above, the abnormality detection device for a railroad car of the present embodiment is capable of estimating a car-side abnormality factor such as a decrease in the damping coefficient of the yaw damper 4.

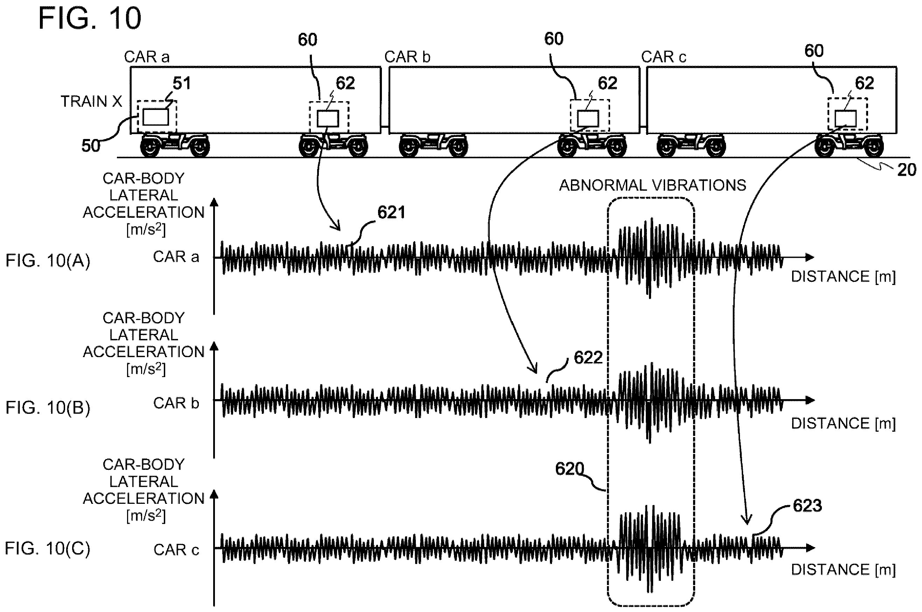

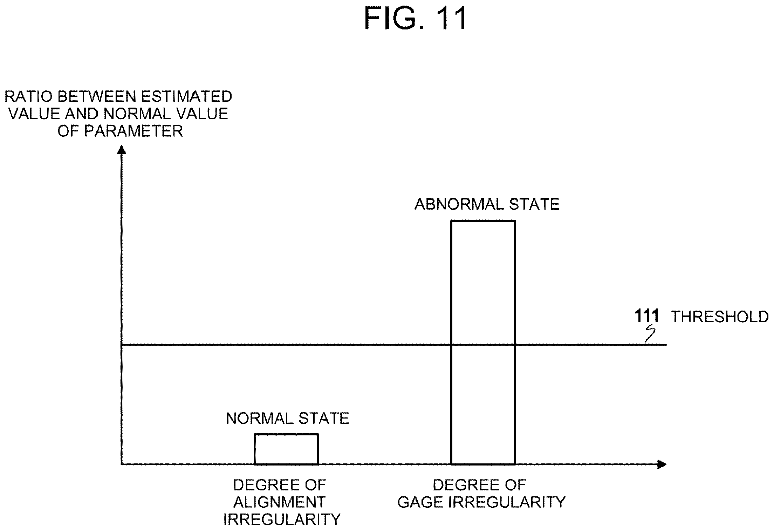

Next, a description will be given of, as another example of the abnormality factor estimation in the abnormality detection device for a railroad car of the present embodiment, a case where abnormal vibrations occur due to a track-side abnormality factor with reference to FIGS. 10 and 11.

FIG. 10 is a diagram schematically showing a case where abnormal vibrations occur in a part of the track 20 due to the fact that the degree of gage irregularity is larger than the management reference value. The basic processing flow is the same as described with reference to FIGS. 1 to 9, only different points will be described.

First, the data analyzer 100 acquires the car-body lateral acceleration from the lateral acceleration sensor 62 and acquires the operation data such as the traveling position, the traveling speed, and the occupancy from the operation data detection means 51.

The data analyzer 100 extracts a data feature from the car-body lateral acceleration and operation data acquired as described above.

In the present embodiment, as shown in FIGS. 10(A), (B), and (C), it is assumed that a feature "there is a difference between sections" is extracted only from a section 620 with respect to abnormal car-body lateral vibrations (abnormal vibrations) that occur in all cars.

Since the data feature is "there is a difference between sections", a determination is made that the abnormality factor lies in the track rather than the car. It is assumed that, as a result, alignment irregularity and gage irregularity of the track 20 are derived as abnormality factor elements from the track-side elements.

Next, the parameter estimator 120 selects a mechanics model and parameters of the mechanics model based on the abnormality factor elements thus derived, and estimates parameters in the abnormal state.

The present embodiment focuses on, as in the example shown in FIG. 4 described above, the car-body lateral acceleration; therefore, it is assumed that the car-lateral mechanics model is selected. Further, since the abnormality factor elements lie in the track, the degrees of alignment irregularity and gage irregularity of the track 20, and the like are selected from the parameters of the car-lateral mechanics model.

Next, initial values of the parameters are set, vibration analysis is executed to obtain the car-body lateral acceleration based on the parameters thus set.

Note that, in order to execute the vibration analysis, data on a virtual car such as the spring constant of the axle box supporting rubber 15 and the damping coefficient of the yaw damper 4 in the car-lateral mechanics model are required.

In the present embodiment, the car is determined to be in the normal state; therefore, the normal value such as the design value is used for the data on the virtual car.

Then, estimated values of the degrees of alignment irregularity and gage irregularity of the track 20 are obtained such that errors in the analysis value and actual measurement value of the car-body lateral acceleration coincide with each other.

Next, the abnormality factor estimator 150 obtains the ratio between the estimated value and normal value of each parameter and compares the ratio with a preset threshold 111 as shown in FIG. 11.

FIG. 11 is a schematic diagram showing a relationship between the ratio between the estimated value and normal value of the parameter, shown on the vertical axis, of the degrees of alignment irregularity and gage irregularity, shown on the horizontal axis and the threshold.

The degree of gage irregularity whose ratio between the estimated value and normal value of the parameter is greater than the threshold 111 is determined to indicate the abnormal state, and an increase in the degree of gage irregularity of the track 20 is output to the determination result output means 200 as an abnormality factor.

The determination result output means 200 notifies the driver on the car, the operation manager or the maintenance staff on the ground, and the like of the estimated result of the abnormality factor.

As described above, the abnormality detection device for a railroad car of the present embodiment is also capable of estimating a track-side abnormality factor such as an increase in the degree of gage irregularity of the track 20.

In other words, the abnormality detection device for a railroad car of the present embodiment is capable of determining, when abnormal vibrations occur, whether an abnormality factor lies in a car-side element or a track-side element

Further, in the abnormality detection device for a railroad car of the present embodiment, the data analyzer 100 narrows down abnormality factor elements in advance, and the parameter estimator 120 selects a mechanics model associated with the abnormality factor elements thus narrowed down and parameters of the mechanics model and then estimate the parameters.

This makes it possible to reduce the number of cases of parameter surveys and shorten the abnormality factor estimation.

Further, the use of the mechanics model makes it possible to estimate the car-side parameters such as the spring constant of the axle box supporting rubber 15, the damping coefficient of the yaw damper 4, and the wheel tread slope of the wheel axle 13 that are not directly measured by sensors, and the track-side parameters such as the degrees of alignment irregularity and gage irregularity of the track 20, and in turn makes it possible to reduce the number of sensors.

Note that, since the present embodiment is an example where the vibration data detection means 61 is installed on the car body 1, the car-lateral mechanics model is used. However, in a case where the vibration data detection means 61 is installed on the truck, a mechanics model of a car element such as a truck-lateral mechanics model may be used.

### [Second embodiment]

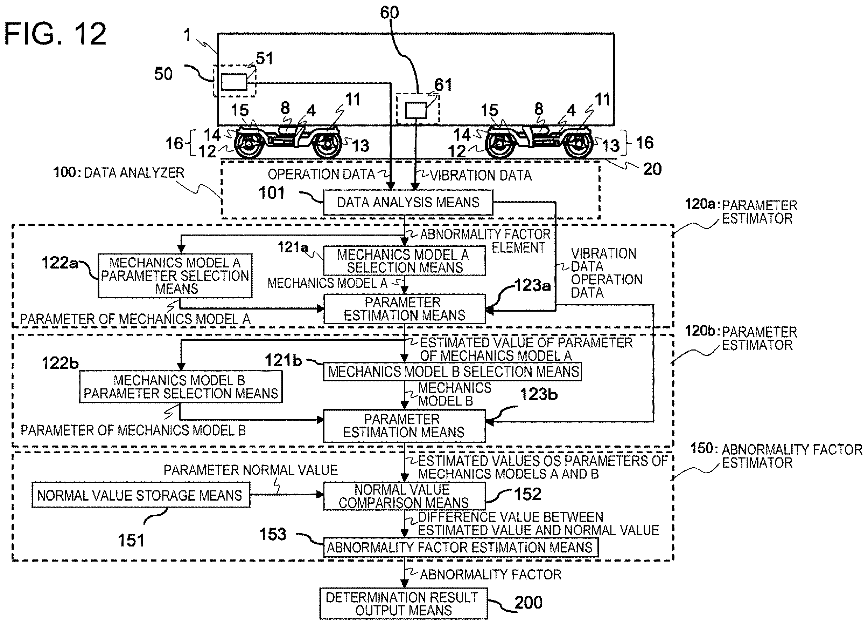

FIG. 12 is a diagram showing a system configuration of another abnormality detection device for a railroad car of the present invention.

The present embodiment is an example where, as processing in the abnormality detection device, abnormal vibrations occur due to not only the car-side abnormality factor (car mechanics model) of the first embodiment, but also the track-side abnormality factor (track mechanics model), that is, both the car-side abnormality factor element and the track-side abnormality factor element.

First, the configuration of the abnormality detection device will be described.

In the present embodiment, a plurality of parameter estimators such as a parameter estimator 120a and a parameter estimator 120b are provided as the parameter estimator 120, the parameter estimator 120a estimates parameters of a mechanics model A based on abnormality factor elements, vibration data, and operation data, the parameter estimator 120b estimates parameters of a mechanics model B based on estimated values of the parameters of the mechanics model A, the vibration data, and the operation data, and the abnormality factor estimator 150 obtains a difference value between the estimated value and the normal value based on the estimated values and normal values of the parameters of the mechanics models A and B to identify an abnormal factor.

The parameter estimator 120a includes mechanics model A selection means 121a, mechanics model A parameter selection means 122a, and parameter estimation means 123a. The parameter estimator 120b includes mechanics model B selection means 121b, mechanics model B parameter selection means 122b, and parameter estimation means 123b.

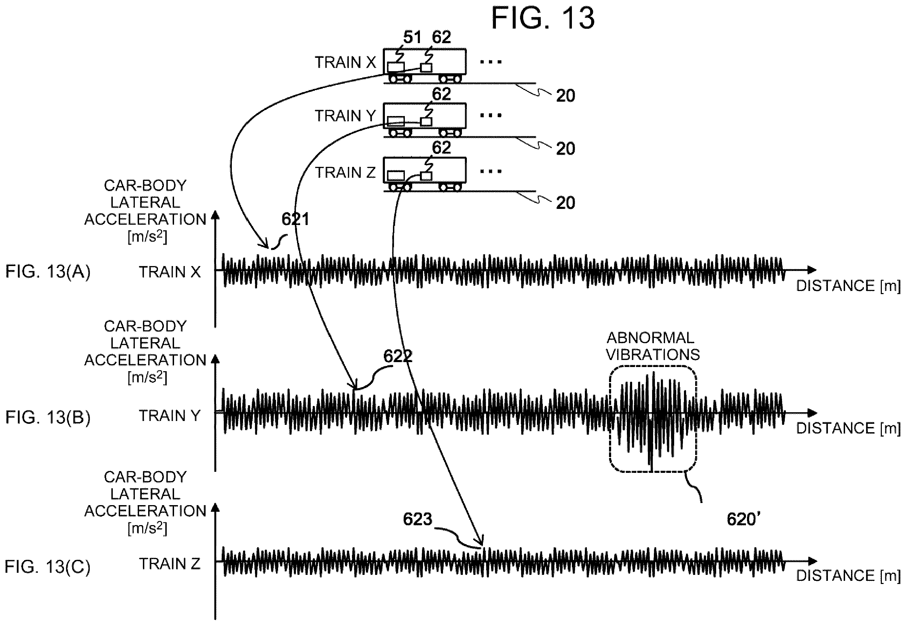

FIG. 13 is a diagram schematically showing a case where abnormal vibrations occur in a train Y, as shown in FIG. 13(B), due to not only a decrease in the damping coefficient of the yaw damper 4 due to oil leakage from the yaw damper 4 but also an increase in the degree of gage irregularity that becomes greater than the management reference value in a part of the track 20 (a section 620' of the car-body lateral acceleration of the train B).

A description will be given below of specific processing of abnormality factor estimation in the abnormality detection device for a railroad car of the present embodiment, in which the same components as described in the first embodiment are denoted by the same reference numerals, their detailed description is omitted, and only operation different from the first embodiment is described.

First, the data analyzer 100 acquires the car-body lateral acceleration and the operation data such as the traveling position, the traveling speed, and the occupancy from the vibration data detection means 61 (for example, the lateral acceleration sensor 62), and the operation data detection means 51.

The data analyzer 100 extracts a data feature from the car-body lateral acceleration and operation data thus acquired.

In the present embodiment, as shown in FIG. 13(B), it is assumed that "there is a difference between trains" is extracted as a feature with respect to abnormal car-body lateral vibrations that occur only in the train B. Further, it is assumed that "there is a difference between sections" is extracted as a feature with respect to the abnormal lateral vibrations of the car body that occur only in a part of the track 20.

Since the data feature is "there is a difference between trains", a determination is made that the abnormality factor lies in the car.

It is assumed that, as a result, the axle box supporting rubber 15, the yaw damper 4, the wheel tread of the wheel axle 13, and the like are derived from the car-side elements as the abnormality factor elements. Further, since the data feature is "there is a difference between sections", it is assumed that the degrees of alignment irregularity and gage irregularity of the track 20, and the like are derived from the track-side elements as the abnormality factor elements.

From the above, a determination is made that the abnormal vibrations occur due to both a car-side abnormality factor and a track-side abnormality factor.

Next, in the parameter estimator 120a, the mechanics model A selection means 121a selects the mechanics model A based on the abnormality factor elements derived by the data analyzer 100, the parameter selection means 122a selects the parameters of the mechanics model A, and the parameter estimation means 123a estimates parameters in the abnormal state based on the vibration data and the operation data.

Further, in the parameter estimator 120b, the mechanics model B selection means 121b selects the mechanics model B based on the estimated values of the parameters of the mechanics model A estimated by the parameter estimator 120a, the parameter selection means 122b selects the parameters of the mechanics model B, and the parameter estimation means 123b estimates parameters in the abnormal state based on the vibration data and the operation data.

In the abnormality factor estimator 150, the normal value comparison means 152 obtains a difference value between the estimated value of each parameter of the mechanics model A estimated by the parameter estimator 120b and the normal value of the parameter, and the abnormality factor estimation means 153 estimates an abnormality factor.

In the present embodiment, the car-side abnormality factor elements and the track-side abnormality factor elements exist, but when these elements are estimated at the same time, the accuracy of parameter estimation may be deteriorated due to the fact that estimation is conducted on both the car-side and track-side, and a large number of parameters are estimated.

Therefore, the abnormality detection device for a railroad car of the present embodiment is characterized in that the car-side abnormality factor elements and the track-side abnormality factor elements are separately estimated.

First, a description will be given of the parameter estimator 120a that conducts the estimation on the car-side abnormality factor elements.

First, the present embodiment focuses on the car-body lateral acceleration as in the first embodiment; therefore, it is assumed that the car-lateral mechanics model is selected by the mechanics model A selection means 121a. Further, in the mechanics model A parameter selection means 122a, the spring constant of the axle box supporting rubber 15, the damping coefficient of the yaw damper 4, the wheel tread slope of the wheel axle 13, and the like are selected from the parameters of the car-lateral mechanics model based on the car-side abnormality factor elements.

Next, the parameter estimator 120a executes the same processing as in S14 to S19 shown in FIG. 6.

That is, the initial values of these parameters are set, vibration analysis is executed, the car-body lateral acceleration based on the parameters thus set is obtained, and the parameters are updated such that the errors in the analysis value and actual measurement value of the car-body lateral acceleration coincide with each other.

Herein, it is characterized in that, as the actual measurement value of the car-body lateral acceleration, car-body lateral acceleration detected in a different section where no abnormal vibration occurs rather than the section where the abnormal vibrations occur is used.

The different section where no abnormal vibration occurs can be determined to be a section where only the car is in the abnormal state, but the track is in the normal state.

Therefore, as virtual track data such as the degrees of alignment irregularity and gage irregularity of the track 20 in the car-lateral mechanics model required for the vibration analysis, for example, a normal value such as a management reference value or an actual measurement data on the track measured by an inspection car is used.

As described above, the car-side parameters can be accurately estimated through estimation using the vibration data in the section where only the car side is in the abnormal state and the track side is in the normal state.

In the present embodiment, estimated values of the spring constant of the axle box supporting rubber 15, the damping coefficient of the yaw damper 4, and the wheel tread slope of the wheel axle 13 are finally obtained.

Next, the parameter estimator 120b that estimates the track-side abnormality factor elements will be described.

This focuses on the car-body lateral acceleration as in the above description; therefore, the car-lateral mechanics model is selected by the mechanics model B selection means 121b. Further, the mechanics model B parameter B selection means 122b selects the degrees of alignment irregularity and gage irregularity of the track 20 from the parameters of the car-lateral mechanics model based on the track-side abnormality factor elements.

Next, the parameter estimator 120a executes the same processing as in S14 to S19 shown in FIG. 6. That is, the initial values of these parameters are set, vibration analysis is executed, the car-body lateral acceleration based on the parameters thus set is obtained, and the parameters are updated such that the errors in the analysis value and actual measurement value of the car-body lateral acceleration coincide with each other.

As the actual measurement value of the car-body lateral acceleration, the car-body lateral acceleration detected in the section where the abnormal vibrations occur is used. In order to execute the vibration analysis, virtual car data such as the spring constant of the axle box supporting rubber 15 and the damping coefficient of the yaw damper 4 in the car-lateral mechanics model is required, and the estimated values of the car-side parameters in the abnormal state estimated in advance are used as the virtual car data. Since the estimation of the car-side parameters of the car-lateral mechanics model has been completed, the track-side parameters can be accurately estimated.

In the present embodiment, estimated values of the degrees of alignment irregularity and gage irregularity of the track 20 are finally obtained.

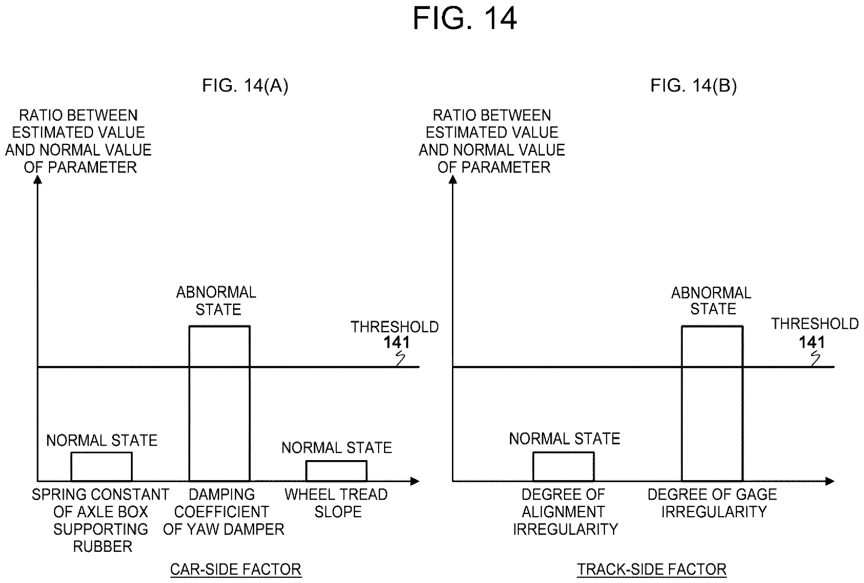

Then, the abnormality factor estimator 150 obtains the ratio between the estimated value and normal value of each parameter and compares the ratio with a preset threshold as shown in FIG. 14.

FIG. 14(A) is a diagram showing a relationship between the ratio between the estimated value and normal value of each parameter of the spring constant of the axle box supporting rubber, the damping coefficient of the yaw damper, and the wheel tread slope, shown on the horizontal axis, and the threshold, and FIG. 14(B) is a diagram showing a relationship between the ratio between the estimated value and normal value of each parameter, shown on the vertical axis, of the degrees of alignment irregularity and gage irregularity and the threshold.

Among the estimated value and normal value of the parameter, and the car-side factors, the damping coefficient of the yaw damper 4 that is greater than the threshold is determined to indicate the abnormal state, and, among the track-side factors, the degree of gage irregularity of the track 20 that is greater than the threshold is determined to indicate the abnormal state.

As a result, a determination is made that both a decrease in the damping coefficient of the yaw damper 4 and an increase in the degree of gage irregularity of the track 20 are the abnormality factors.

As described above, the abnormality detection device for a railroad car of the present embodiment is characterized by being capable of determining whether the abnormality factor lies in the car-side element or the track-side element when abnormal vibrations occur due to both the car-side abnormality factor and the track-side abnormality factor.

### [Third embodiment]

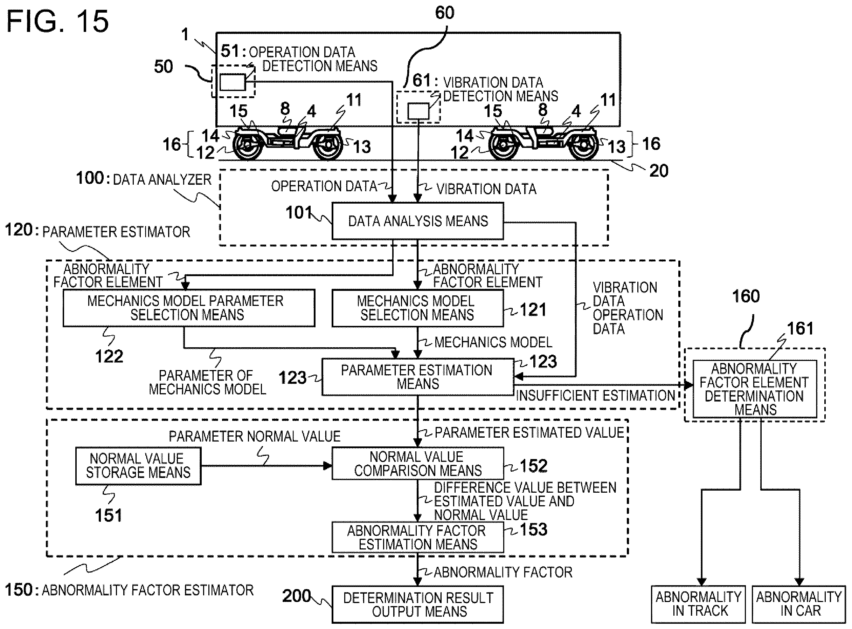

FIG. 15 is a diagram showing a system configuration of yet another abnormality detection device for a railroad car of the present invention.

The abnormality detection device of the present embodiment is different from the abnormality detection device of the first embodiment in that, for processing when the accuracy of parameter estimation is insufficient in the parameter estimator 120, an abnormality factor element determination part 160 including abnormality factor element determination means 161 is further provided. The same components as described in the first embodiment are denoted by the same reference numerals, and their detailed description is omitted.

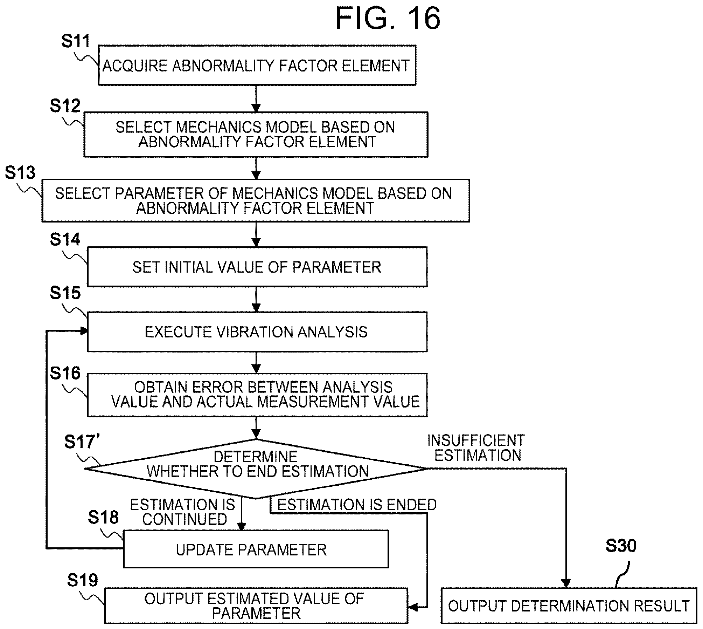

FIG. 16 is a flowchart showing a flow of processing to be executed by the parameter estimator 120 of the present embodiment. Only points different from the first embodiment will be described below.

In the present embodiment, as in the first embodiment, in S15 to S18, the error between the actual measurement value and analysis value of the car-body lateral acceleration is obtained, and the parameter update is repeated until the error becomes sufficiently small. However, in S15 to S18, even when the number of times of updates is greater than the preset number, the estimation accuracy is determined to be insufficient in S17' when the error between the actual measurement value and analysis value of the car-body lateral acceleration does not fall below the preset threshold. Then, the result (insufficient estimation) is output to the abnormality factor element determination means 161.

The abnormality factor element determination means 161 determines in S30 whether the abnormality factor lies in the car side or the track side, or both the car side and the track side based on the abnormality factor elements already acquired by the data analyzer 100 to identify the abnormality factor elements, and outputs only the result (track abnormality, car abnormality).

As described above, in the abnormality detection device for a railroad car of the present embodiment, the parameter estimator 120 is capable of outputting, even when the accuracy of parameter estimation is insufficient, the result of the determination of the abnormality factor without interrupting the determination of the abnormality factor.

According to the embodiments described above, the following effects can be expected.
(1) The use of the mechanics model makes it possible to estimate parameters that are not directly measured, which in turn makes it possible to reduce the number of sensors.
(2) Narrowing down abnormality factor elements in advance through correlation analysis over the vibration data and the operation data makes it possible to reduce the number of cases of parameter surveys and in turn to execute factor estimation in a short period of time.
(3) The use of not only the car model but also the track model makes it possible to identify not only the car-side abnormality factor but also the track-side abnormality factor.
(4) Even when a vibration abnormality occurs due to both the car side and the track side, it is possible to identify the abnormality factor.

The descriptions of the above embodiments have been given in detail in order to facilitate the understanding of the present invention, and the present invention is not necessarily limited to an embodiment having all the configurations described above.

Further, part of the configuration of one embodiment may be replaced with the configuration of another embodiment, and the configuration of another embodiment may be added to the configuration of the one embodiment.

Further, it is possible to add a different configuration to part of the configuration of each embodiment, delete the part of the configuration, or replace the part of the configuration with the different configuration.

### Reference Signs List

- 1: car body
- 4: yaw damper
- 8: air spring
- 11: truck frame
- 12: axle box body
- 13: wheel axle
- 14: axle spring device
- 15: axle box supporting rubber
- 16: truck
- 20: track
- 50: operation data detector
- 51: operation data detection means
- 60: vibration data detector
- 61: vibration data detection means
- 62: lateral acceleration sensor
- 100: data analyzer
- 101: data analysis means
- 120, 120a, 120b: parameter estimator
- 121: mechanics model selection means
- 122: mechanics model parameter selection means
- 123: parameter estimation means
- 150: abnormality factor estimator
- 151: normal value storage means
- 152: normal value comparison means
- 153: abnormality factor estimation means
- 160: abnormality factor element determination part
- 161: abnormality factor element determination means
- 200: determination result output means

## Claims

1. An abnormality detection device for a railroad car that detects an abnormality in a railroad car traveling on a track, comprising a car-vibration factor estimation device that estimates a car-vibration factor that causes the railroad car to vibrate, wherein
the car-vibration factor estimation device includes
a data analyzer (100) that acquires and analyzes vibration data representing vibrations of the railroad car and operation data on the railroad car to derive an abnormality factor element that causes the railroad car to vibrate, the vibration data being detected by a vibration data detection device (60) including a data detector that detects the vibration data, the operation data being detected by an operation data detection device (50) including a data detector that detects the operation data,
an abnormality factor element estimator (160) that estimates the abnormality factor element that causes vibrations derived by the data analyzer (100) based on the vibration data and the operation data, and
an abnormality factor estimator (150) that estimates an abnormality factor of abnormal vibrations of the railroad car based on the abnormality factor element estimated by the abnormality factor element estimator;
wherein the abnormality factor element estimator includes a parameter estimator (120) that estimates a parameter of a car-side mechanics model and a parameter of a track-side mechanics model,
the parameter estimator includes:
mechanics model selection means (121) that selects a mechanics model associated in advance with the abnormality factor element based on the abnormality factor element,
a parameter selection means (122) that selects a parameter of the mechanics model, and
a parameter estimation means (123) that receives the mechanics model, the parameter, the vibration data, and the operation data and estimates a parameter with the railroad car in an abnormal state;
**characterized in that** the abnormality factor estimator includes (150):
normal value comparison means (152) that compares the estimated value of the parameter in the abnormal state estimated by the parameter estimator with a normal value of the parameter in a normal state to obtain a ratio between the estimated value and the normal value, and
abnormality factor estimation means (153) that estimates the abnormality factor of abnormal vibrations of the railroad car based on the ratio corresponding to a result of the comparison in the normal value comparison means (152).

2. The abnormality detection device for a railroad car according to claim 1, wherein
the parameter estimator (120) includes a first parameter estimator (120a) and a second parameter estimator (120b),
when the abnormality factor element lies in both a car and a track,
the first parameter estimator (120a) estimates a parameter in the abnormal state based on an abnormality factor that lies in the car based on the abnormality factor element, the vibration data, and the operation data from the data analyzer,
the second parameter estimator (120b) estimates a parameter in the abnormal state based on an abnormality factor that lies in the track based on the parameter estimated by the first parameter estimator, the vibration data, and the operation data, and
the abnormality factor estimator (150) estimates the abnormality factor based on an estimated value of the parameter in the abnormal state estimated by the first parameter estimator and the second parameter estimator and a normal value of the parameter in the normal state.

3. The abnormality detection device for a railroad car according to claim 1 or 2, further comprising an abnormality factor element determination part (160) that causes the parameter estimator (120) to determine an estimation accuracy of the estimated value of the parameter, determines that, when the estimation accuracy is equal to or less than a preset threshold, the estimation accuracy is insufficient, and only outputs whether the abnormality factor lies in the car, the track, or both the car and the track.

4. The abnormality detection device for a railroad car according to any one of claims 1 to 3, wherein the vibration data detection device (60) includes a vibration data detector that detects vibrations of a car body, truck frame, or axle box body of the railroad car.

5. The abnormality detection device for a railroad car according to any one of claims 1 to 4, wherein the vibration data detection device (60) and the operation data detection device (50) are each provided in a plurality of cars of one train or in a plurality of trains.

6. The abnormality detection device for a railroad car according to any one of claims 1 to 5, wherein the mechanics model is either a car-lateral mechanics model or a car-vertical mechanics model.

7. The abnormality detection device for a railroad car according to any one of claims 1 to 6, wherein the parameter estimation means (123) of the parameter estimator (120) estimates a parameter for the abnormality factor element using a genetic algorithm.

8. An abnormality detection method of the abnormality detection device for a railroad car according to claim 1, the method comprising:
a step of acquiring vibration data on the railroad car and operation data on the railroad car;
a step of analyzing the vibration data and operation data acquired to derive an abnormality factor element with the railroad car in a vibration state;
a step of estimating the abnormality factor element by identifying a current value of a characteristic of the abnormality factor element in the vibration data and operation data derived in the step of analyzing the vibration data and operation data based on a mechanics model to estimate the abnormality factor element; and
a step of estimating a factor of the abnormality in the railroad car based on a result of comparison between an estimated value of the abnormality factor element estimated in the step of estimating the abnormality factor element and a normal value in a normal state;
wherein:
the step of estimating the abnormality factor element includes a step of estimating a parameter,
the step of estimating a parameter includes,
a step of selecting the mechanics model,
a step of selecting a parameter of the mechanics model, and
a step of estimating a parameter of the abnormality factor element based on the mechanics model, the parameter, the vibration data, and the operation data and outputting an estimated value of the parameter,
the step of estimating a factor of the abnormality includes
a step of comparing the estimated value of the parameter estimated in the step of estimating a parameter with a normal value of the parameter stored in advance in a storage, and
a step of estimating the factor of the abnormality in the railroad car based on a ratio between the estimated value of the parameter and the normal value of the parameter, and
the mechanics model is either a car mechanics model or a track mechanics model.

## Patentansprüche

1. Anomaliedetektionsvorrichtung für einen Eisenbahnwaggon, die eine Anomalie in einem Eisenbahnwaggon detektiert, der auf Schienen fährt, umfassend eine Waggonschwingungsfaktor-Schätzvorrichtung, die einen Waggonschwingungsfaktor schätzt, der bewirkt, dass der Eisenbahnwaggon schwingt, wobei die Waggonschwingungsfaktor-Schätzvorrichtung Folgendes umfasst:
eine Datenanalyseeinheit (100), die Schwingungsdaten, die Schwingungen des Eisenbahnwaggons darstellen, und Betriebsdaten über den Eisenbahnwaggon erfasst und analysiert, um ein Anomaliefaktorelement abzuleiten, das bewirkt, dass der Eisenbahnwaggon schwingt, wobei die Schwingungsdaten durch eine Schwingungsdatendetektionsvorrichtung (60) detektiert werden, die einen Datendetektor umfasst, der die Schwingungsdaten detektiert, wobei die Betriebsdaten durch eine Betriebsdatendetektionsvorrichtung (50) detektiert werden, die einen Datendetektor umfasst, der die Betriebsdaten detektiert,
eine Anomaliefaktorelement-Schätzeinheit (160), die das Anomaliefaktorelement schätzt, das Schwingungen bewirkt, die von der Datenanalyseeinheit (100) basierend auf den Schwingungsdaten und den Betriebsdaten abgeleitet wurden, und
eine Anomaliefaktor-Schätzeinheit (150), die einen Anomaliefaktor anomaler Schwingungen des Eisenbahnwaggons basierend auf dem Anomaliefaktorelement schätzt, das durch die Anomaliefaktorelement-Schätzeinheit geschätzt wurde;
wobei die Anomaliefaktorelement-Schätzeinheit eine Parameterschätzeinheit (120) umfasst, die einen Parameter eines waggonseitigen Mechanikmodells und einen Parameter eines fahrbahnseitigen Mechanikmodells schätzt,
wobei die Parameterschätzeinheit Folgendes umfasst:
ein Mechanikmodell-Auswahlmittel (121), das ein Mechanikmodell auswählt, das im Vorhinein dem Anomaliefaktorelement basierend auf dem Anomaliefaktorelement zugeordnet wurde,
ein Parameterauswahlmittel (122), das einen Parameter des Mechanikmodells auswählt, und
ein Parameterschätzmittel (123), das das Mechanikmodell, den Parameter, die Schwingungsdaten und die Betriebsdaten empfängt und einen Parameter für den Eisenbahnwaggon in einem anomalen Zustand schätzt;
**dadurch gekennzeichnet, dass** die Anomaliefaktor-Schätzeinheit (150) Folgendes umfasst:
ein Normalwert-Vergleichsmittel (152), das den geschätzten Wert des Parameters in dem anomalen Zustand, der durch die Parameterschätzeinheit geschätzt wurde, mit einem Normalwert des Parameters in einem normalen Zustand vergleicht, um ein Verhältnis zwischen dem geschätzten Wert und dem Normalwert zu erhalten, und
ein Anomaliefaktor-Schätzmittel (153), das den Anomaliefaktor von anomalen Schwingungen des Eisenbahnwaggons basierend auf dem Verhältnis schätzt, das einem Ergebnis des Vergleichs in dem Normalwert-Vergleichsmittel (152) entspricht.

2. Anomaliedetektionsvorrichtung für einen Eisenbahnwaggon nach Anspruch 1, wobei:
die Parameterschätzeinheit (120) eine erste Parameterschätzeinheit (120a) und eine zweite Parameterschätzeinheit (120b) aufweist,
wenn das Anomaliefaktorelement sowohl in einem Waggon als auch in Schienen vorliegt,
die erste Parameterschätzeinheit (120a) einen Parameter in dem anomalen Zustand basierend auf einem Anomaliefaktor, der in dem Waggon vorliegt, basierend auf dem Anomaliefaktorelement, den Schwingungsdaten und den Betriebsdaten aus der Datenanalyseeinheit schätzt,
die zweite Parameterschätzeinheit (120b) einen Parameter in dem anomalen Zustand basierend auf einem Anomaliefaktor, der in den Schienen vorliegt, basierend auf dem Parameter, der durch die erste Parameterschätzeinheit geschätzt wurde, den Schwingungsdaten und den Betriebsdaten schätzt und
die Anomaliefaktorschätzeinheit (150) den Anomaliefaktor basierend auf einem geschätzten Wert des Parameters in dem anomalen Zustand durch die erste Parameterschätzeinheit und die zweite Parameterschätzeinheit und einem normalen Wert des Parameters in dem Normalzustand schätzt.

3. Anomaliedetektionsvorrichtung für einen Eisenbahnwaggon nach Anspruch 1 oder 2, die ferner einen Anomaliefaktorelement-Bestimmungsteil (160) umfasst, der die Parameterschätzeinheit (120) veranlasst, eine Schätzgenauigkeit des geschätzten Werts des Parameters zu bestimmen, bestimmt, dass, wenn die Schätzgenauigkeit kleiner oder gleich einem voreingestellten Schwellenwert ist, die Schätzgenauigkeit nicht ausreichend ist, und nur ausgibt, ob der Anomaliefaktor in dem Waggon, den Schienen oder sowohl dem Waggon als auch den Schienen vorliegt.

4. Anomaliedetektionsvorrichtung für einen Eisenbahnwaggon nach einem der Ansprüche 1 bis 3, wobei die Schwingungsdaten-Detektionsvorrichtung (60) eine Schwingungsdatendetektionseinheit umfasst, die Schwingungen eines Waggonkörpers, eines Drehgestellrahmens oder eines Achslagerkörpers des Eisenbahnwaggons detektiert.

5. Anomaliedetektionsvorrichtung für einen Eisenbahnwaggon nach einem der Ansprüche 1 bis 4, wobei die Schwingungsdaten-Detektionsvorrichtung (60) und die Betriebsdaten-Detektionsvorrichtung (50) jeweils in einer Vielzahl von Waggons eines Zugs oder in einer Vielzahl von Zügen bereitgestellt sind.

6. Anomaliedetektionsvorrichtung für einen Eisenbahnwaggon nach einem der Ansprüche 1 bis 5, wobei das Mechanikmodell entweder ein waggon-laterales Mechanikmodell oder ein waggon-vertikales Mechanikmodell ist.

7. Anomaliedetektionsvorrichtung für einen Eisenbahnwaggon nach einem der Ansprüche 1 bis 6, wobei das Parameterschätzmittel (123) der Parameterschätzeinheit (120) einen Parameter für das Anomaliefaktorelement unter Verwendung eines genetischen Algorithmus schätzt.

8. Anomaliedetektionsverfahren einer Anomaliedetektionsvorrichtung für einen Eisenbahnwaggon nach Anspruch 1, wobei das Verfahren Folgendes umfasst:
einen Schritt des Erfassens von Schwingungsdaten zu dem Eisenbahnwaggon und Betriebsdaten zu dem Eisenbahnwaggon;
einen Schritt des Analysierens der erfassten Schwingungsdaten und Betriebsdaten, um ein Anomaliefaktorelement mit dem Eisenbahnwaggon in einem Schwingungszustand abzuleiten;
einen Schritt des Schätzens des Anomaliefaktorelements durch Identifizieren eines aktuellen Werts einer Eigenschaft des Anomaliefaktorelements in den Schwingungsdaten und Betriebsdaten, das in dem Schritt des Analysierens der Schwingungsdaten und Betriebsdaten basierend auf einem Mechanikmodell abgleitet wurde, um das Anomaliefaktorelement zu schätzen; und
einen Schritt des Schätzens eines Faktors der Anomalie in dem Eisenbahnwaggon basierend auf einem Ergebnis des Vergleichs zwischen einem geschätzten Wert des Anomaliefaktorelements, das in dem Schritt des Schätzens des Anomaliefaktorelements geschätzt wurde, und einem Normalwert in einem normalen Zustand;
wobei:
der Schritt des Schätzens des Anomaliefaktorelements einen Schritt des Schätzens eines Parameters umfasst,
der Schritt des Schätzens eines Parameters Folgendes umfasst:
einen Schritt des Auswählens des Mechanikmodells,
einen Schritt des Auswählens eines Parameters des Mechanikmodells und
einen Schritt des Schätzens eines Parameters des Anomaliefaktorelements basierend auf dem Mechanikmodell, dem Parameter, den Schwingungsdaten und den Betriebsdaten und des Ausgebens eines geschätzten Werts des Parameters,
der Schritt des Schätzens eines Faktors der Anomalie Folgendes umfasst:
einen Schritt des Vergleichens des geschätzten Werts des Parameters, der in dem Schritt des Schätzens eines Parameters geschätzt wurde, mit einem Normalwert des Parameters, der im Vorhinein in einem Speicher gespeichert wurde, und
einen Schritt des Schätzens des Faktors der Anomalie in dem Eisenbahnwaggon basierend auf einem Verhältnis zwischen dem geschätzten Wert des Parameters und dem Normalwert des Parameters und
wobei das Mechanikmodell entweder ein Waggon-Mechanikmodell oder ein Schienen-Mechanikmodell ist.

## Revendications

1. Dispositif de détection d'anomalie pour véhicule ferroviaire qui détecte une anomalie dans un véhicule ferroviaire se déplaçant sur une voie, comprenant un dispositif d'estimation de facteur de vibration de véhicule qui estime un facteur de vibration de véhicule qui amène le véhicule ferroviaire à vibrer, dans lequel
le dispositif d'estimation de facteur de vibration de véhicule inclut
un analyseur de données (100) qui acquiert et analyse des données de vibrations représentant des vibrations du véhicule ferroviaire et des données de fonctionnement sur le véhicule ferroviaire pour dériver un élément de facteur d'anomalie qui amène le véhicule ferroviaire à vibrer, les données de vibrations étant détectées par un dispositif de détection de données de vibrations (60) incluant un détecteur de données qui détecte les données de vibrations, les données de fonctionnement étant détectées par un dispositif de détection de données de fonctionnement (50) incluant un détecteur de données qui détecte les données de fonctionnement,
un dispositif d'estimation d'élément de facteur d'anomalie (160) qui estime l'élément de facteur d'anomalie qui provoque des vibrations dérivées par l'analyseur de données (100) sur la base des données de vibrations et des données de fonctionnement, et
un dispositif d'estimation de facteur d'anomalie (150) qui estime un facteur d'anomalie de vibrations anormales du véhicule ferroviaire sur la base de l'élément de facteur d'anomalie estimé par le dispositif d'estimation d'élément de facteur d'anomalie ;
dans lequel le dispositif d'estimation d'élément de facteur d'anomalie inclut un dispositif d'estimation de paramètre (120) qui estime un paramètre d'un modèle de mécanique côté véhicule et un paramètre d'un modèle de mécanique côté voie,
le dispositif d'estimation de paramètre inclut :
un moyen de sélection de modèle de mécanique (121) qui sélectionne un modèle de mécanique associé à l'avance à l'élément de facteur d'anomalie sur la base de l'élément de facteur d'anomalie,
un moyen de sélection de paramètre (122) qui sélectionne un paramètre du modèle de mécanique, et
un moyen d'estimation de paramètre (123) qui reçoit le modèle de mécanique, le paramètre, les données de vibrations et les données de fonctionnement et estime un paramètre avec le véhicule ferroviaire dans un état anormal ;
**caractérisé en ce que** le dispositif d'estimation de facteur d'anomalie inclut (150) :
un moyen de comparaison de valeur normale (152) qui compare la valeur estimée du paramètre dans l'état anormal estimé par le dispositif d'estimation de paramètre avec une valeur normale du paramètre dans un état normal pour obtenir un rapport entre la valeur estimée et la valeur normale, et
un moyen d'estimation de facteur d'anomalie (153) qui estime le facteur d'anomalie de vibrations anormales du véhicule ferroviaire sur la base du rapport correspondant à un résultat de la comparaison dans le moyen de comparaison de valeur normale (152).

2. Dispositif de détection d'anomalie pour véhicule ferroviaire selon la revendication 1, dans lequel
le dispositif d'estimation de paramètre (120) inclut un premier dispositif d'estimation de paramètre (120a) et un second dispositif d'estimation de paramètre (120b),
lorsque l'élément de facteur d'anomalie se trouve à la fois dans un véhicule et dans une voie,
le premier dispositif d'estimation de paramètre (120a) estime un paramètre dans l'état anormal sur la base d'un facteur d'anomalie qui se trouve dans la véhicule sur la base de l'élément de facteur d'anomalie, des données de vibrations et des données de fonctionnement provenant de l'analyseur de données,
le second dispositif d'estimation de paramètre (120b) estime un paramètre dans l'état anormal sur la base d'un facteur d'anomalie qui se trouve dans la voie sur la base du paramètre estimé par le premier dispositif d'estimation de paramètre, des données de vibrations et des données de fonctionnement, et
le dispositif d'estimation de facteur d'anomalie (150) estime le facteur d'anomalie sur la base d'une valeur estimée du paramètre dans l'état anormal estimé par le premier dispositif d'estimation de paramètre et le second dispositif d'estimation de paramètre et d'une valeur normale du paramètre dans l'état normal.

3. Dispositif de détection d'anomalie pour véhicule ferroviaire selon la revendication 1 ou 2, comprenant en outre une partie de détermination d'élément de facteur d'anomalie (160) qui amène le dispositif d'estimation de paramètre (120) à déterminer une précision d'estimation de la valeur estimée du paramètre, détermine que, lorsque la précision d'estimation est égale ou inférieure à un seuil prédéfini, la précision d'estimation est insuffisante, et délivre en sortie uniquement si le facteur d'anomalie se trouve dans le véhicule, la voie, ou à la fois le véhicule et la voie.

4. Dispositif de détection d'anomalie pour véhicule ferroviaire selon l'une quelconque des revendications 1 à 3, dans lequel le dispositif de détection de données de vibrations (60) inclut un détecteur de données de vibrations qui détecte les vibrations d'une carrosserie de véhicule, d'un châssis de camion ou d'une carrosserie de boîte d'essieu du véhicule ferroviaire.

5. Dispositif de détection d'anomalie pour véhicule ferroviaire selon l'une quelconque des revendications 1 à 4, dans lequel le dispositif de détection de données de vibrations (60) et le dispositif de détection de données de fonctionnement (50) sont chacun fournis dans une pluralité de véhicules d'un train ou dans une pluralité de trains.

6. Dispositif de détection d'anomalie pour véhicule ferroviaire selon l'une quelconque des revendications 1 à 5, dans lequel le modèle de mécanique est soit un modèle de mécanique latérale de véhicule, soit un modèle de mécanique verticale de véhicule.

7. Dispositif de détection d'anomalie pour véhicule ferroviaire selon l'une quelconque des revendications 1 à 6, dans lequel le moyen d'estimation de paramètre (123) du dispositif d'estimation de paramètre (120) estime un paramètre pour l'élément de facteur d'anomalie en utilisant un algorithme génétique.

8. Procédé de détection d'anomalie du dispositif de détection d'anomalie pour un véhicule ferroviaire selon la revendication 1, le procédé comprenant :
une étape d'acquisition de données de vibrations sur le véhicule ferroviaire et des données de fonctionnement sur le véhicule ferroviaire ;
une étape d'analyse des données de vibrations et des données de fonctionnement acquises pour dériver un élément de facteur d'anomalie avec le véhicule ferroviaire dans un état de vibration ;
une étape d'estimation de l'élément de facteur d'anomalie en identifiant une valeur courante d'une caractéristique de l'élément de facteur d'anomalie dans les données de vibrations et les données de fonctionnement dérivées dans l'étape d'analyse des données de vibrations et des données de fonctionnement sur la base d'un modèle de mécanique pour estimer l'élément de facteur d'anomalie ; et
une étape d'estimation d'un facteur de l'anomalie dans le véhicule ferroviaire sur la base d'un résultat de comparaison entre une valeur estimée de l'élément de facteur d'anomalie estimée dans l'étape consistant à estimer l'élément de facteur d'anomalie et une valeur normale dans un état normal ;
dans lequel :
l'étape consistant à estimer l'élément de facteur d'anomalie inclut une étape d'estimation d'un paramètre,
l'étape d'estimation d'un paramètre inclut,
une étape de sélection du modèle de mécanique,
une étape de sélection d'un paramètre du modèle de mécanique, et
une étape d'estimation d'un paramètre de l'élément de facteur d'anomalie sur la base du modèle de mécanique, du paramètre, des données de vibrations et des données de fonctionnement, et de délivrance en sortie d'une valeur estimée du paramètre,
l'étape d'estimation d'un facteur de l'anomalie inclut
une étape consistant à comparer la valeur estimée du paramètre estimée à l'étape d'estimation d'un paramètre à une valeur normale du paramètre stockée à l'avance dans une mémoire, et
une étape d'estimation du facteur de l'anomalie dans le véhicule ferroviaire sur la base d'un rapport entre la valeur estimée du paramètre et la valeur normale du paramètre, et
le modèle de mécanique est soit un modèle de mécanique de véhicule, soit un modèle de mécanique de voie.
